# EUROPÄISCHE PATENTANMELDUNG

(11) **EP 4 759 124 A1**
(43) Veröffentlichungstag der Anmeldung: **17.06.2026**
(21) Anmeldenummer: 24219875.2
(22) Anmeldetag: 13.12.2024
(51) Int. Cl.: A01D 75/20, F16P 3/00, G05B 9/02, A01B 71/02, A01D 34/82, A01F 21/00, A01F 12/16

(54) **SICHERHEITSVORRICHTUNG FÜR EINE LANDMASCHINE, LANDMASCHINE UND VERFAHREN ZUM BETREIBEN EINER SICHERHEITSVORRICHTUNG EINER LANDMASCHINE**

(71) Anmelder: Kverneland Group Soest GmbH, 59494 Soest (DE)
(72) Erfinder: HARTE, Christian, Soest (DE); FALINSKI, Jürgen, Soest (DE)
(74) Vertreter: Bittner, Thomas L.

(57) **Zusammenfassung**

Die Erfindung betrifft eine Sicherheitsvorrichtung (1) für eine Landmaschine mit: einer Steuereinrichtung (2) mit einem Prozessor; einer Signaleingangseinrichtung (3), die betreibbar ist, ein Zustandssignal zu empfangen, welches einen Betriebszustand der Landmaschine anzeigt, und ein Freigabesignal zu empfangen; und einer Schalteinrichtung (14), die betreibbar ist, als Reaktion auf Steuersignale von der Steuereinrichtung (2) eine Versorgungsleitung (9) zu einer Energieversorgung eines Aktors (7) der Landmaschine und einer dem Aktor (7) zugeordneten elektronischen Steuereinheit zu unterbrechen und zu schließen. Die Steuereinrichtung (2) ist betreibbar: Als Reaktion auf den Empfang des Zustandssignals in der Steuereinrichtung (2) mittels Auswerten des Zustandssignals zu bestimmen, ob für die Landmaschine ein abzusichernder Betriebszustand vorliegt, in welchem eine Betätigung eines Aktors (7) der Landmaschine zu blockieren ist; einen Sicherheitszustand zu aktivieren, wenn beim Auswerten des Zustandssignals bestimmt wird, dass der abzusichernde Zustand vorliegt; ein erstes Steuersignal zum Unterbrechen der Versorgungsleitung (9) für eine Übermittlung an die Schalteinrichtung (14) bereitzustellen, während der Sicherheitszustand aktiviert ist; und als Reaktion auf den Empfang des Freigabesignals in der Steuereinrichtung (2) den Sicherheitszustand zu deaktivieren, wobei beim Deaktivieren mittels der Steuereinrichtung (2) ein zweites Steuersignal zum Schließen der Versorgungsleitung (9) für eine Übermittlung an die Schalteinrichtung (14) bereitstellbar ist. Weiterhin sind ein Verfahren zum Betreiben der Sicherheitsvorrichtung (1) sowie eine Landmaschine vorgesehen.

## Beschreibung

Die Erfindung betrifft eine Sicherheitsvorrichtung für eine Landmaschine, eine Landmaschine sowie ein Verfahren zum Betreiben einer Sicherheitsvorrichtung einer Landmaschine.

### Hintergrund

Beim Betrieb von Landmaschinen sind sowohl bei der Feldarbeit wie auch bei der Straßenfahrt regelmäßig Sicherheitsvorschriften zu beachten, welche insbesondere der Betriebssicherheit der Landmaschine und der Vermeidung von Gefahrensituationen dienen. Zweck der Sicherheitsvorschriften ist es zum Beispiel, Gefahren für Bedienpersonen sowie andere Personen zu vermeiden. Hierbei stellt es bei modernen Landmaschinen eine besondere Herausforderung dar, dass immer mehr Aktoren der Landmaschine, also beispielsweise Zylinder oder Ventile, mittels elektronischer Steuerung bedient werden können, was es dem Bedienpersonal zum Beispiel ermöglichen kann, die Betätigung des Aktors mittels Eingabe an einem Terminal in einer Fahrerkabine eines Schleppers der Landmaschine auszulösen. Gegenüber einer manuellen Betätigung und / oder manuellen Sicherung von Maschinenteilen der Landmaschine, zum Beispiel zum Verlagern oder Schwenken von Auslegern oder Tragarmen und deren Sicherung in der geschwenkten Stellung, besteht die Gefahr, dass aufgrund der Fern-Betätigung des Aktors eine sich im Umfeld der Landmaschine befindende Person gefährdet werden kann. Wird zum Beispiel während einer Straßen- oder Transportfahrt ein Aktor unbeabsichtigt betätigt, welcher einen Ausleger, einen Tragarm und / oder ein Arbeitswerkzeug der Landmaschine bewegt, zum Beispiel verschwenkt, wodurch für die Landmaschine die Maschinenbreite, -länge und / oder -höhe vergrößert wird, kann dieses zu Gefahrensituationen führen. Aber auch die unbeabsichtigte Betätigung eines Aktors, mit dem ein Ventil einer Spritzdüse oder einer Behälteröffnung geöffnet wird, kann zu Gefahren für Personen führen, wenn dies zum Beispiel bei einer Straßenfahrt erfolgen würde.

Es besteht daher Bedarf, für Landmaschinen derartige Gefahrensituationen zu vermeiden.

### Zusammenfassung

Aufgabe der Erfindung ist es, eine Sicherheitsvorrichtung für eine Landmaschine, eine Landmaschine sowie ein Verfahren zum Betreiben einer Sicherheitsvorrichtung einer Landmaschine anzugeben, mit denen Gefahrensituationen, insbesondere Situationen, die zur Personengefährdung führen können, besser vermieden sind.

Zur Lösung ist eine Sicherheitsvorrichtung für eine Landmaschine nach dem unabhängigen Anspruch 1 geschaffen. Weiterhin sind eine Landmaschine sowie ein Verfahren zum Betreiben einer Sicherheitsvorrichtung einer Landmaschine nach den nebengeordneten Ansprüchen 12 und 13 geschaffen. Ausgestaltungen sind Gegenstand von abhängigen Unteransprüchen.

Nach einem Aspekt ist eine Sicherheitsvorrichtung für eine Landmaschine geschaffen, die Folgendes aufweist: eine Steuereinrichtung, die mindestens einen Prozessor aufweist; eine Signaleingangseinrichtung, die mit der Steuereinrichtung funktional verbunden und betreibbar ist, ein Zustandssignal zu empfangen, welches einen Betriebszustand einer Landmaschine anzeigt, und ein Freigabe- Statussignal zu empfangen; und eine Schalteinrichtung, die der mit der Steuereinrichtung funktional verbunden und betreibbar ist, als Reaktion auf Steuersignale von der Steuereinrichtung eine Versorgungsleitung zu einer Energieversorgung eines Aktors der Landmaschine und einer dem Aktor zugeordneten elektronischen Steuereinheit zu unterbrechen und zu schließen. Die Steuereinrichtung ist betreibbar, (i) als Reaktion auf den Empfang des Zustandssignals in der Steuereinrichtung mittels Auswerten des Zustandssignals zu bestimmen, ob für die Landmaschine ein abzusichernder Betriebszustand vorliegt, in welchem eine Betätigung eines Aktors der Landmaschine zu blockieren ist; (ii) einen Sicherheitszustand zu aktivieren, wenn beim Auswerten des Zustandssignals bestimmt wird, dass der abzusichernde Zustand vorliegt; (iii) ein erstes Steuersignal zum Unterbrechen der Versorgungsleitung für eine Übermittlung an die Schalteinrichtung bereitzustellen, während der Sicherheitszustand aktiviert ist; und (iv) als Reaktion auf den Empfang des Freigabesignals in der Steuereinrichtung den Sicherheitszustand zu deaktivieren, wobei beim Deaktivieren mittels der Steuereinrichtung ein zweites Steuersignal zum Schließen der Versorgungsleitung für eine Übermittlung an die Schalteinrichtung bereitstellbar ist.

Nach einem weiteren Aspekt ist eine Landmaschine mit der Sicherheitsvorrichtung geschaffen.

Nach einem anderen Aspekt ist ein Verfahren zum Betreiben einer Sicherheitsvorrichtung einer Landmaschine geschaffen, wobei Folgendes vorgesehen ist:
- Empfangen eines Zustandssignals in einer mindestens einen Prozessor aufweisenden Steuereinrichtung einer Sicherheitsvorrichtung einer Landmaschine über eine Signaleingangseinrichtung der Sicherheitsvorrichtung, welche mit der Steuereinrichtung funktional verbunden ist;
- als Reaktion auf das Empfangen des Zustandssignals, Auswerten des Zustandssignals und Bestimmen durch die Steuereinrichtung, ob für die Landmaschine ein abzusichernder Betriebszustand vorliegt, in welchem eine Betätigung eines Aktors der Landmaschine zu blockieren ist;
- Aktivieren eines Sicherheitszustands für die Sicherheitsvorrichtung, wenn beim Auswerten des Zustandssignals bestimmt wird, dass der abzusichernde Zustand vorliegt;
- Bereitstellen ein erstes Steuersignals zum Unterbrechen einer Versorgungsleitung mittels der Steuereinrichtung, und Übersenden des ersten Steuersignals an eine Schalteinrichtung während der Sicherheitszustand aktiviert ist, wobei über die Versorgungsleitung der Aktor der Landmaschine und eine dem Aktor zugeordnete elektronische Steuereinheit mit einer Energieversorgung verbunden werden;
- Empfangen des ersten Steuersignals in einer Schalteinrichtung der Sicherheitsvorrichtung, die der mit der Steuereinrichtung funktional verbunden in der Versorgungsleitung angeordnet ist, und Unterbrechen der Versorgungsleitung mittels der Schalteinrichtung;
- Empfangen eines Freigabesignal in der Steuereinrichtung über die Signaleingangseinrichtung der Sicherheitsvorrichtung; und
- als Reaktion auf den Empfang des Freigabesignals, Deaktivieren den Sicherheitszustand für die Sicherheitsvorrichtung, wobei hierbei mittels der Steuereinrichtung ein zweites Steuersignal zum Schließen der Versorgungsleitung bereitgestellt und an die Schalteinrichtung gesendet wird; und
- Empfangen des zweiten Steuersignals in der Schalteinrichtung und Schließen der Versorgungsleitung mittels der Schalteinrichtung.

Mit Hilfe der Sicherheitsvorrichtung, welche aufgrund ihrer Ausgestaltung mit der Sicherheit dienenden, elektronischen Baukomponenten auch als elektronische Sicherheitsvorrichtung bezeichnet werden kann, ist es ermöglicht, die Betätigung des Aktors der Landmaschine zu blockieren oder zu unterbinden, wenn die Steuereinrichtung der Sicherheitsvorrichtung beim Auswerten des empfangenen Zustandssignals bestimmt, dass ein abzusichernder Betriebszustand für die Landmaschine vorliegt. Ein abzusichernder Zustand der Landmaschine ist dadurch charakterisiert, dass ein oder mehrere Aktoren der Landmaschine gegen eine Betätigung gesperrt sind, also nicht betätigt werden können, auch nicht zufällig oder unbeabsichtigt. Beispielsweise handelt es sich bei dem abzusichernden Betriebszustand um einen Transportzustand oder einen Nicht-Nutzungszustand der Landmaschine. Beim Transport, wofür die Landmaschine für den Transportzustand hergerichtet ist, zum Beispiel im Rahmen einer Stra-βenfahrt, kann so das unbeabsichtigte Betätigen des oder der Aktoren sicher unterbunden oder blockiert werden. Hierzu unterbricht die mit der Sicherheitsvorrichtung bereitgestellte Schalteinrichtung die Energieversorgung des Aktors sowie der dem Aktor zugeordneten elektronischen Steuereinheit, welche insbesondere eingerichtet ist, Steuersignale zum Betätigen des Aktors zu empfangen und den Aktor hierauf den empfangenen Steuersignalen entsprechend zu betätigen. Aufgrund der Unterbrechung der Versorgungsleitung werden zum Beispiel unbeabsichtigt oder zufällig an die elektronische Steuereinheit übermittelte Steuersignale zum Betätigen des Aktors nicht ausgeführt.

Die Steuereinrichtung ist eingerichtet, die Versorgungsleitung beim Aktivieren des Sicherheitszustands in der Sicherheitsvorrichtung zu initiieren, wobei hierzu ein erstes Steuersignal von der Steuereinrichtung bereitgestellt und an die Schalteinrichtung übermittelbar ist. Das erste Steuersignal ist ausgebildet, eine Betätigung der Schalteinrichtung zu bewirken, derart, dass auf dem Empfang des ersten Steuersignals in der Schalteinrichtung die Versorgungsleitung unterbrochen wird.

Es kann vorgesehen sein, dass das erste Steuersignal oder ein jeweiliges erstes Steuersignal an mehrere Schalteinrichtungen, die jeweils der Schalteinrichtung entsprechend ausgeführt sind, übermittelt wird, so dass eine jeweilige Versorgungsleitung von mehreren Aktoren auf den Empfang des ersten Steuersignals unterbrochen wird. Eine solche Ausgestaltung kann vorgesehen sein, wenn im Sicherheitszustand eine Betätigung für die mehreren Aktoren jeweils unterbunden werden soll.

Wird in der Steuereinrichtung zu einem späteren Zeitpunkt das Freigabesignal empfangen, welches anzeigt, dass der Sicherheitszustand zu beenden ist, ist die Steuereinrichtung als Reaktion hierauf betreibbar, den Sicherheitszustand zu deaktivieren und als Teil der Deaktivierung ein zweites Steuersignal zum Schließen der Versorgungsleitung bereitzustellen und an die Schalteinrichtung zu senden. Das zweite Steuersignal ist eingerichtet, eine Betätigung der Schalteinrichtung zu bewirken, derart, dass diese die Versorgungsleitung (wieder) schließt, also von einem geöffneten in einen geschlossenen Schaltzustand überzugehen. Hierauf steht dem Aktor und der elektronischen Steuereinheit des Aktors die Energieversorgung wieder zur Verfügung, so dass eine Betätigung des Aktors der Landmaschine ermöglicht ist.

Es kann vorgesehen sein, dass die Steuereinrichtung betreibbar ist, dass zweite Steuersignal erst bereitzustellen, wenn die Sicherheitsvorrichtung zuvor auch noch von der Energie- / Spannungsversorgung getrennt und wieder mit dieser verbunden wurde (Wiedereinschalten).

Bei dem Aktor der Landmaschine kann es sich um einen elektrischen, einen pneumatischen oder einen hydraulischen Aktor handeln, beispielsweise einen Zylinder, dessen Länge mittels Betätigen veränderbar ist, oder ein Ventil, welches mittels Betätigen geöffnet und geschlossen werden kann. Auch der Betrieb von Aktoren der Landmaschine anderer Art kann mittels der Sicherheitsvorrichtung abgesichert werden, zum Beispiel ein Lichtaktor wie ein Scheinwerfer, der nach hinten gerichtet ist und andere Fahrzeugführer blenden könnte.

Die Landmaschine kann mit einem Schlepper und einem vom Schlepper gezogenen Anbaugerät wie beispielsweise Sämaschine, Maschine zum Ausbringen eines flüssigen Materials wie Pflanzenschutz oder Dünger, Bodenbearbeitungsmaschine, Düngerstreuer, Erntemaschine oder dergleichen gebildet sein. In einer anderen Ausgestaltung weist die Landmaschine einen Schlepper auf, welcher das Anbaugerät trägt. Auch als selbstfahrendes Arbeits- oder Anbaugerät, welches eingerichtet ist, landwirtschaftliche Arbeiten auszuführen, wie zum Beispiel Düngerstreuen, Sähen, Ernten, Bodenbearbeitung, Transportieren, Ausbringen von Pflanzenschutzmittel oder dergleichen, kann die Landmaschine ausgeführt sein. Ausführungen hiervon können auch als selbstfahrende landwirtschaftliche Arbeitsmaschine bezeichnet werden.

Die Sicherheitsvorrichtung kann auf dem Schlepper oder dem Anbaugerät angeordnet sein.

Die Signaleingangseinrichtung kann einen Zustandssignaleingang, welcher betreibbar ist, das Zustandssignal zu empfangen, und einen Freigabe-Signaleingang aufweisen, welcher getrennt von dem Zustandssignaleingang gebildet und betreibbar ist, Freigabesignal zu empfangen. Bei dieser Ausgestaltung werden das Zustandssignal einerseits und das Freigabesignal andererseits über voneinander getrennt gebildete Signaleingänge der Signaleingangseinrichtung empfangen. Bei dieser oder anderen Ausführungsformen kann die Signaleingangseinrichtung ein oder mehrere digitale Signaleingänge aufweisen, die betreibbar sind, jeweils digitale Signale zu empfangen. So können zum Beispiel der Zustandssignaleingang und der Freigabe-Signaleingang jeweils als digitaler Signaleingang ausgebildet sein.

Die Sicherheitsvorrichtung kann einer der folgenden Ausführungen entsprechend ausgebildet sein: (i) die Steuereinrichtung, die Signaleingangseinrichtung und die Schalteinrichtung sind in einem Vorrichtungsgehäuse angeordnet; und (ii) die Steuereinrichtung und die Signaleingangseinrichtung sind in einem Vorrichtungsgehäuse angeordnet, und die Schalteinrichtung ist außerhalb des Vorrichtungsgehäuses angeordnet.

Je nach Ausführungsform sind Komponenten der Sicherheitsvorrichtung in einem Vorrichtungsgehäuse angeordnet, insbesondere in einem gemeinsamen Vorrichtungsgehäuse. Die Schalteinrichtung kann im Vorrichtungsgehäuse aufgenommen sein, wenn die Versorgungsleitung sich durch das Vorrichtungsgehäuse erstreckt, also zum Beispiel im Vorrichtungsgehäuse von einem Versorgungsleitungseingang zu einem Versorgungsleitungsausgang geführt ist. Zumindest ein Abschnitt der Versorgungsleitung verläuft dann in dem Vorrichtungsgehäuse vom Versorgungsleitungseingang zur Schalteinrichtung und von der Schalteinrichtung zum Versorgungsleitungsausgang.

Ist die Schalteinrichtung außerhalb des Vorrichtungsgehäuses angeordnet, was sowohl bei einem teilweisen Verlauf der Versorgungsleitung durch das Vorrichtungsgehäuse wie auch einem Verlauf der Versorgungsleitung vollständig außerhalb des Vorrichtungsgehäuses vorgesehen sein kann, ist ein Steuersignalausgang vorgesehen, welcher mit der Steuereinrichtung funktional verbunden ist und an den eine Signalleitung zur Schalteinrichtung hin anschließt, um insbesondere das erste und das zweite Steuersignal an die Schalteinrichtung zu übertragen.

Das Vorrichtungsgehäuse kann ein- oder mehrstückig ausgebildet sein. Innerhalb des Vorrichtungsgehäuses können gemeinsame oder getrennte Aufnahmeräume für ein oder mehrere der Einrichtungen oder Komponenten der Sicherheitsvorrichtung ausgebildet sein.

Bei der Sicherheitsvorrichtung kann eine Stromüberwachungseinrichtung vorgesehen sein, welche mit der Steuereinrichtung funktional verbunden und betreibbar ist, einen Strom oder Stromfluss in der Versorgungsleitung zu der dem Aktor zugeordneten elektronischen Steuereinheit und dem Aktor zu erfassen und Strommesssignale an die Steuereinrichtung zu senden, welche Strommesswerte für den erfassten Stromfluss anzeigen. Die Steuereinrichtung kann dann betreibbar sein, (i) als Reaktion auf den Empfang des Zustandssignals in der Steuereinrichtung den Sicherheitszustand zu aktivieren und ein drittes Steuersignal zum Beginn des Erfassens des Stromflusses bereitzustellen und an die Stromüberwachungseinrichtung zu senden, und (ii) das erste Steuersignal zum Unterbrechen der Versorgungsleitung nach dem Empfangen des Zustandssignals erst dann bereitzustellen und an die Schalteinrichtung zu senden, wenn die Strommesswerte gleich einem oder größer als ein Stromschwellwert sind.

Bei dieser Ausgestaltung ist vorgesehen, beim Aktivieren des Sicherheitszustands für die Sicherheitsvorrichtung zunächst mit Hilfe der Stromüberwachungseinrichtung den Strom in der Versorgungsleitung zu erfassen und zu beobachten, also nicht sogleich das erste Steuersignal zum Unterbrechen der Versorgungsleitung bereitzustellen. Vielmehr ist die Steuereinrichtung betreibbar, auf dem Empfang des Zustandssignals den Sicherheitszustand zu aktivieren und hierbei zunächst das dritte Steuersignal zu erzeugen, mit dem das Erfassen der Strommesssignale für die Versorgungsleitung mittels der Stromüberwachungseinrichtung initiiert oder gestartet wird. Bestimmt die Steuereinrichtung für die empfangenen Strommesswerte, dass diese gleich dem oder größer als der Stromschwellwert sind, wird das erste Steuersignal zum Unterbrechen der Versorgungsleitung mittels der Steuereinrichtung bereitgestellt und an die Schalteinrichtung gesendet.

Die Steuereinrichtung ist somit betreibbar, einen Stromfluss unterhalb des Stromschwellwerts, insbesondere einen Stromfluss über die Versorgungsleitung zu der dem Aktor zugeordneten elektronischen Steuereinheit zuzulassen, bevor das erste Steuersignal zum Unterbrechen der Versorgungsleitung bereitgestellt wird. Zum Beispiel kann auf diese Weise ein Stromfluss im Milliamper-Bereich zugelassen werden, welches beispielsweise einen Basis- oder Leerbetrieb der elektronischen Steuereinheit ermöglichen kann, wohingegen Ströme im Amper-Bereich den Stromschwellwert überschreiten, worauf die Versorgungsleitung unterbrochen wird. Solche erhöhten Ströme zeigen potentiell eine (beabsichtigte) Betätigung des Aktors an, was im abzusichernden Zustand der Landmaschine zu blockieren oder zu unterbinden ist, weshalb dann die Versorgungsleitung unterbrochen wird. Der den Basis- oder Leerbetrieb der elektronischen Steuereinheit erlaubende Strom reicht jedoch nicht aus, um den Aktor zu betätigen.

Solange das erste Steuersignal von der Steuereinrichtung noch nicht erzeugt ist, also kein Unterbrechen der Versorgungsleitung durch die Steuereinrichtung initiiert wurde, ist der Sicherheitszustand für die Sicherheitsvorrichtung aktiv und der Stromfluss in der Versorgungsleitung wird hierbei mit der Stromüberwachungseinrichtung überwacht. Bleibt dies für die gesamte Zeit der Aktivierung des Sicherheitszustandes der Fall, erreicht der gemessene Strom also nicht den Stromschwellwert oder überschreitet diesen nicht, kann der Sicherheitszustand auf dem Empfang des Freigabesignals auch deaktiviert werden, ohne dass es während der Aktivierungszeit zu einer Unterbrechung der Versorgungsleitung gekommen ist.

Beim Unterbinden oder Blockieren des Aktors im Sicherheitszustand kann eine Betätigung des Aktors zumindest soweit begrenzt oder unterbunden werden, dass der Aktor eine mittels des Aktors im Normalbetrieb (Nicht-Sicherheitszustand) bereitgestellte Aktorbewegung nicht vollständig ausführen kann. Betriebsbedingt kann der Aktor im Fall des Sicherheitszustands aufgrund eines Betätigungssignals eine Teilaktorbewegung oder -verlagerung aus einem Ausgangszustand in einen teilverlagerten Zustand ausführen, was den Strom in der Versorgungsleitung ansteigen lässt. Diesen Anstieg detektiert die Stromüberwachungseinrichtung, worauf die Unterbrechung der Versorgungsleitung erfolgt, was den Strom wieder abfallen lässt, wodurch der Aktor wieder aus dem teilverlagerten Zustand in den Ausgangszustand zurückkehrt. Alternativ erfolgen Detektion des Stromanstiegs und nachfolgendes Unterbrechen der Versorgungsleitung so schnell, dass es gar nicht zur Teilverlagerung oder -betätigung des Aktors kommt.

Die Stromüberwachungseinrichtung kann innerhalb oder außerhalb des Vorrichtungsgehäuses der Sicherheitsvorrichtung angeordnet sein, insbesondere gemeinsam mit der Schalteinrichtung.

Die Steuereinrichtung kann betreibbar sein, als Reaktion auf den Empfang des Zustandssignals in der Steuereinrichtung das erste Steuersignal zum Unterbrechen der Versorgungsleitung um eine vorbestimmte Zeitverzögerung gegenüber dem Empfang des Zustandssignals verzögert bereitzustellen und an die Schalteinrichtung zu senden. Die vorbestimmte Zeitverzögerung kann einstellbar und veränderbar sein. In der Steuereinrichtung, insbesondere in einem zugeordneten Speicher, können Daten hinterlegt sein, die die vorbestimmte Zeitverzögerung anzeigen, so dass die Steuereinrichtung betreibbar ist, dass Erzeugen des ersten Steuersignals zum Unterbrechen der Versorgungsleitung mittels Auslesen der hinterlegten Daten entsprechend zu bewirken.

Bei dieser und anderen Ausgestaltungen kann vorgesehen sein, mit Hilfe der Stromüberwachungseinrichtung zunächst zu überwachen, ob ein Stromanstieg über wenigstens einen Stromanstiegszeitraum vorliegt, wobei der Stromanstiegszeitraum kürzer als die vorbestimmte Zeitverzögerung ist. Der Stromanstiegszeitraum kann als einstellbar sein, um eine Anpassung an unterschiedliche Betriebsbedingungen zu ermöglichen. Die Steuereinrichtung kann betreibbar sein, das zweite Steuersignal erst dann bereitzustellen, wenn der erhöhte Stromfluss für wenigstens den Stromanstiegszeitraum gemessen wird. Hierdurch ist es zum Beispiel ermöglicht, ein unbeabsichtigtes Unterbrechen der Versorgungsleitung zu verhindern, wenn der Stromanstieg die Folge eines kurzzeitig erhöhten Messstroms ist, die für angeschlossene Aktoren vorgesehen sein kann, insbesondere zu Diagnosezwecken. Mittels einer solchen Diagnose soll beispielsweise feststellt werden, ob der Aktor noch angeschlossen ist und / oder ob ein Kabelbruch vorliegt.

Es kann eine Datenbusschnittstelle vorgesehen sein, welche mit der Steuereinrichtung funktional verbunden und eingerichtet ist, zum Übertragen von Datensignalen an einen Datenbus der Landmaschine funktional zu koppeln. Der Datenbus der Landmaschine kann zum Beispiel dem ISOBUS-Standard entsprechend ausgeführt sein. Mit Hilfe des Ankoppelns an den Datenbus der Landmaschine kann ein Datenaustausch der Sicherheitsvorrichtung, insbesondere der Steuereinrichtung der Sicherheitsvorrichtung, mit anderen Komponenten der Landmaschine ermöglicht sein, die ihrerseits über eine zugeordnete Datenbusschnittstelle zur Datenübertragung funktional an dem Datenbus angeschlossen sind. Beispielsweise kann so der Austausch von Datensignalen mit einem Terminal ermöglicht sein, welches eine Mensch-Maschine-Schnittstelle des Datenbusses bildet. Insbesondere sind über das Terminal Eingaben eines Benutzers der Landmaschine erfassbar. So kann vorgesehen sein, dass über das Terminal des Datenbusses der Landmaschine einer Benutzereingabe für das Zustandssignal und / oder das Freigabesignal empfangen und an die Sicherheitsvorrichtung übermittelt wird. Die Datenbusschnittstelle kann am Vorrichtungsgehäuse angeordnet sein.

Die Steuereinrichtung kann betreibbar sein, auf das Aktivieren des Sicherheitszustandes ein Sicherheitszustands-Signal bereitzustellen, wobei das Sicherheits-Zustandssignal das Aktivieren des Sicherheitszustandes für die Sicherheitsvorrichtung anzeigt. Das Sicherheitszustands-Signal zeigt an, dass für die Sicherheitsvorrichtung der Sicherheitszustand aktiviert ist, insbesondere unabhängig davon, ob das erste Steuersignal zum Unterbrechen der Versorgungsleitung schon bereitgestellt wurde oder zunächst (nur) der Stromfluss in der Versorgungsleitung mit Hilfe der Stromüberwachungseinrichtung erfasst wird. Das Sicherheitszustands-Signal kann zum Beispiel für eine Übermittlung an die dem Aktor zugeordnete elektronische Steuereinheit bereitgestellt werden, sei es über den Datenbus der Landmaschine und / oder eine hiervon getrennte Datenübertragungsverbindung zwischen der Sicherheitsvorrichtung und der elektronischen Steuereinheit. Die getrennt gebildete Datenübertragungsverbindung kann eine Signalausgangseinrichtung der Sicherheitsvorrichtung mit der elektronischen Steuereinheit zur Datenübertragung verbinden.

Die Signaleingangseinrichtung und die Steuereinrichtung können betreibbar sein, das Zustandssignal ein Sensorsignal von einer Sensoreinrichtung umfassend zu empfangen, wobei das Sensorsignal einen mittels der Sensoreinrichtung erfassten Betriebszustand der Landmaschine anzeigt. Bei dieser Ausführungsform ist vorgesehen, dass Sensorsignale mit Hilfe einer Sensoreinrichtung für die Landmaschine erfasst werden, wobei die Sensorsignale auswertbar sind, um unterschiedliche Betriebszustände der Landmaschine zu bestimmen. Insbesondere können die Sensorsignale eingerichtet sein, einen Transportzustand und / oder einen Nicht-Nutzungszustand der Landmaschine zu bestimmen. Aber auch Sensorsignale, die andere Betriebszustände der Landmaschine anzeigen, zum Beispiel einen Betrieb der Landmaschine im Vorgewende, können mittels geeigneter Sensoreinrichtung erfasst werden. Diese verschiedenen Betriebszustände können jeweils einen abzusichernden Betriebszustand der Landmaschine im Sinne der vorliegenden Offenbarung bilden.

In einer Ausgestaltung ist vorgesehen, dass die Sensorsignale für den Aktor erfasst werden und die Sensorsignale auswertbar sind, einen Betriebszustand des Aktors zu bestimmen, welcher seinerseits indikativ für den Betriebszustand der Landmaschine ist. Beispielsweise können die Sensorsignale mit Hilfe eines Positionssensors erfasst werden, um eine Stellung und / oder eine Position des Aktors zu erfassen. Position und / oder Stellung des Aktors können zum Beispiel indikativ sein für eine Verlagerungsstellung eines aus- und einfahrbaren Maschinenbauteils wie Rahmenbauteil oder Arbeitswerkzeug der Landmaschine. Zeigen die Sensorsignale eine eingefahrene oder eine eingeklappte Stellung für den Aktor und / oder einen oder mehrere andere Aktoren an, kann dies einen Transportzustand und / oder einen Nicht-Nutzungszustand der Landmaschine anzeigen.

Die Sensorsignale zeigen ein oder mehrere Zustandseigenschaften der Landmaschine an, welche von der Steuereinrichtung ausgewertet werden können, um zu bestimmen, ob ein abzusichernder Zustand der Landmaschine vorliegt. In einer ergänzenden oder alternativen Ausgestaltung kann vorgesehen sein, dass das in der Steuereinrichtung empfangene Zustandssignal ein Vorliegen des abzusichernden Zustands bereits selbst anzeigt. In diesem Fall kann vorgesehen sein, dass die Steuereinrichtung das Zustandssignal beim Auswerten (lediglich) ausliest, ohne dieses näher zu analysieren. Be dieser Ausführungsform wurde mittels Datenanalyse außerhalb der Sicherheitsvorrichtung, zum Beispiel im Terminal des Datenbusses der Landmaschine ein Vorliegen des abzusichernden Zustandes bestimmt.

Alternativ oder ergänzend kann das Zustandssignal bei den verschiedenen Ausführungsbeispielen eine Benutzereingabe umfassen, mit der der Benutzer der Landmaschine das Vorliegen eines abzusichernden Zustands der Landmaschine, zum Beispiel den Transportzustand, mitteilt oder anzeigt.

Die Steuereinrichtung ist eingerichtet, die jeweiligen Zustandssignale auszuwerten und zu bestimmen, ob aufgrund des Zustandssignals der Sicherheitszustand für die Sicherheitsvorrichtung zu aktivieren ist. So kann die Steuereinrichtung zum Beispiel eingerichtet sein, zu bestimmen, ob das Zustandssignal eine vorbestimmte Stellung eines Aktors oder eines Maschinenbauteils anzeigt und den Sicherheitszustand aktivieren, wenn dies der Fall ist. Anderenfalls erfolgt keine Aktivierung des Sicherheitszustands für die Sicherheitsvorrichtung. Ebenso kann beim Auswerten des Zustandssignals durch die Steuereinrichtung bestimmt werden, dass die empfangene Benutzereingabe das Vorliegen des abzusichernden Betriebszustandes anzeigt.

Die Steuereinrichtung kann betreibbar sein, ein oder mehrere Sensorsignale aus der folgenden Gruppe zu empfangen und auszuwerten: Geschwindigkeitssignal, welches eine momentane Fahrgeschwindigkeit der Landmaschine anzeigt; Positionssignal, welches eine momentane Ortsposition der Landmaschine anzeigt; Lagesignal, welches eine Verlagerungsstellung eines Maschinen- oder Rahmenteils der Landmaschine anzeigt; und Stellungssignal, welches eine Stellung eines Maschinen- oder Rahmenteils der Landmaschine anzeigt, insbesondere eine Schwenk- oder Drehstellung. Im Rahmen des jeweiligen Signalempfangs können ein oder mehrere Signalwerte oder -daten empfangen werden.

In Verbindung mit dem Geschwindigkeitssignal kann beim Auswerten durch die Steuereinrichtung der Sicherheitszustand aktiviert werden, wenn bestimmt wird, dass das Geschwindigkeitssignal eine momentane Fahrgeschwindigkeit anzeigt, die einen Geschwindigkeitsschwellwert erreicht oder überschreitet, was zum Beispiel eine Transport- oder Straßenfahrt indiziert. Im Unterschied hierzu ist die Geschwindigkeit bei der Feldarbeit der Landmaschine regelmäßig geringer. Im Zusammenhang mit dem Positionssignal kann die Steuereinrichtung betreibbar sein, den Sicherheitszustand zu aktivieren, wenn die Positionssignale eine momentane Ortsposition der Landmaschine auf einer Straße (nicht auf dem Feld) anzeigen, was eine beabsichtigte oder laufende Straßenfahrt der Landmaschine und den hierfür vorgesehenen Transportzustand der Landmaschine indiziert. Hierfür kann die Sensoreinrichtung zum Beispiel mit einem GPS-Sensor gebildet sein.

Die Signaleingangseinrichtung der Sicherheitsvorrichtung kann mehrere Signaleingänge aufweisen, über die jeweils Datensignale empfangen werden können, insbesondere digitale Datensignale. Ein erster Signaleingang kann betreibbar sein, Sensorsignale von der Sensoreinrichtung zu empfangen, die ein oder mehrere Zustandseigenschaften der Landmaschine anzeigen. Beispielsweise kann es sich um den Geschwindigkeitssensor handeln, mit dem eine momentane Fahrgeschwindigkeit der Landmaschine erfasst wird. Alternativ oder ergänzend kann ein Stellungs- oder Lagesensor vorgesehen sein, mit dem Stellungs- / Lagesignalsignale für einen Aktor der Landmaschine erfasst werden, wobei das entsprechende Signal eine Verlagerungsstellung und / oder eine Schwenk- oder Drehstellung des Aktors und / oder eines mittels des Aktors verlagerbaren Maschinen- oder Rahmenbauteils der Landmaschine anzeigen können. Auch kann das Stellungssignal eine Ventilstellung eines Ventils der Landmaschine anzeigen, zum Beispiel eines Ventils zum Öffnen und zum Schließen von Sprühdüsen, wie diese zum Beispiel bei Maschinen zum Ausbringen von flüssigem Material wie Pflanzenschutzmittel vorgesehen sind.

Der Aktor kann betreibbar sein, einen Ausleger, einen Tragarm und / oder ein Arbeitswerkzeug der Landmaschine zu verlagern, insbesondere zu verschwenken, wodurch für die Landmaschine die Maschinenbreite, -länge und / oder -höhe vergrößert wird.

Die Steuereinrichtung betreibbar ist, als Sensorsignal ein Aktor-Sensorsignal zu empfangen und auszuwerten, also ein Sensorsignal, welches einen mittels der Sensoreinrichtung detektierten Betriebszustand des Aktors anzeigt, für den dann im Sicherheitszustand die Versorgungsleitung überwacht und / oder unterbrochen wird. Auch kann die Steuereinrichtung alternativ oder ergänzend betreibbar ist, als Sensorsignal ein weiteres Aktor-Sensorsignal zu empfangen und auszuwerten, also ein Sensorsignal, welches einen mittels der Sensoreinrichtung detektierten Betriebszustand eines weiteren Aktors anzeigt, dessen Versorgungsleitung im Fall des Aktivierens des Sicherheitszustands weder überwacht noch unterbrochen wird, insbesondere weil eine eventuelle Betätigung des weiteren Aktors zum Beispiel im Transportzustand und / oder Nicht-Nutzungszustand nicht kritisch oder sicherheitsrelevant oder seine Betätigung in diesen Zuständen sogar erforderlich ist. Trotzdem kann das weitere Aktor-Sensorsignal die Notwendigkeit der Aktivierung des Sicherheitszustandes für den (anderen) Aktor indizieren.

Die Signaleingangseinrichtung und die Steuereinrichtung können betreibbar sein, das Freigabesignal ein Benutzer-Freigabe-Signal umfassend zu empfangen. Bei dieser Ausführungsform ist vorgesehen, dass das Freigabesignal, auf dessen Empfang der Sicherheitszustand für die Sicherheitsvorrichtung deaktiviert wird, ein von einem Nutzer oder Bediener der Landmaschine über eine Benutzerschnittstelle empfangenes Benutzer-Freigabe-Signal umfasst. Beispielsweise kann das Benutzer-Freigabe-Signal infolge einer Benutzereingabe über das Terminal des Datenbusses der Landmaschine im Terminal erzeugt werden.

Alternativ oder ergänzend kann vorgesehen sein, dass die Signaleingangseinrichtung der Sicherheitsvorrichtung einen Signaleingang umfasst, welcher für eine drahtlose Datenkommunikation eingerichtet ist, derart, dass ein Sendesignal von einem tragbaren Handgerät des Benutzers empfangen werden kann, welches das Benutzer-Freigabe-Signal bildet. Ein solches tragbares Handgerät kann der Benutzer zum Beispiel in die Fahrerkabine eines Schleppers der Landmaschine mitnehmen und dort bedienen.

Bei Ausgestaltungen kann vorgesehen sein, dass das Freigabe-Signal, welches in der Steuereinrichtung der Sicherheitsvorrichtung empfangen wird, ein erstes und ein zweites Freigabe-signal umfasst, wobei der Sicherheitszustand für die Sicherheitsvorrichtung nur dann deaktiviert wird, wenn sowohl das erste als auch das zweite Freigabesignal in der Steuereinrichtung empfangen werden. Zum Beispiel kann vorgesehen sein, dass das erste Freigabe-signal vom Benutzer über das Terminal des Datenbusses der Landmaschine eingegeben wird und das zweite Freigabesignal vom Benutzer mit Hilfe des tragbaren Handgeräts draht- oder kabellos an die Signaleingangseinrichtung der Sicherheitsvorrichtung übermittelt wird. Bei dieser Ausgestaltung sind voneinander unabhängige Datenübertragungen für das erste und das zweite Freigabesignal vorgesehen, was die Sicherheit zur Vermeidung einer unbeabsichtigten Deaktivierung des Sicherheitszustands erhöht. In einer anderen Ausgestaltung können an der Landmaschine ein erster und ein zweiter Taster vorgesehen sein, die getrennt voneinander gebildet sind, derart, dass eine Betätigung des ersten und des zweiten Tasters durch den Benutzer mit einer jeweiligen Hand erfolgen muss, was also den Einsatz beider Hände erfordert. Die Steuereinrichtung kann eingerichtet sein, den Sicherheitszustand nur dann zu deaktivieren, wenn das erste Freigabesignal vom ersten Taster und das zweite Freigabesignal vom zweiten Taster im Wesentlichen zeitgleich in der Steuereinrichtung empfangen werden.

Die vorangehenden Ausgestaltungen können in Verbindung mit der Landmaschine und / oder dem Verfahren zum Betreiben der Sicherheitsvorrichtung einer Landmaschine entsprechend vorgesehen sein.

### Beschreibung von Ausführungsbeispielen

Im Folgenden werden weitere Ausführungsbeispiele unter Bezugnahme auf Figuren einer Zeichnung erläutert. Hierbei zeigen:
- Fig. 1: eine schematische Darstellung einer Anordnung mit einer Sicherheitsvorrichtung für eine Landmaschine nach einem ersten Ausführungsbeispiel;
- Fig. 2: eine schematische Darstellung einer Anordnung mit einer Sicherheitsvorrichtung für eine Landmaschine gemäß einem zweiten Ausführungsbeispiel;
- Fig. 3: eine schematische Darstellung einer Anordnung mit einer Sicherheitsvorrichtung für eine Landmaschine gemäß einem dritten Ausführungsbeispiel und
- Fig. 4: eine schematische Darstellung einer Anordnung mit einer Sicherheitsvorrichtung für eine Landmaschine gemäß einem vierten Ausführungsbeispiel.

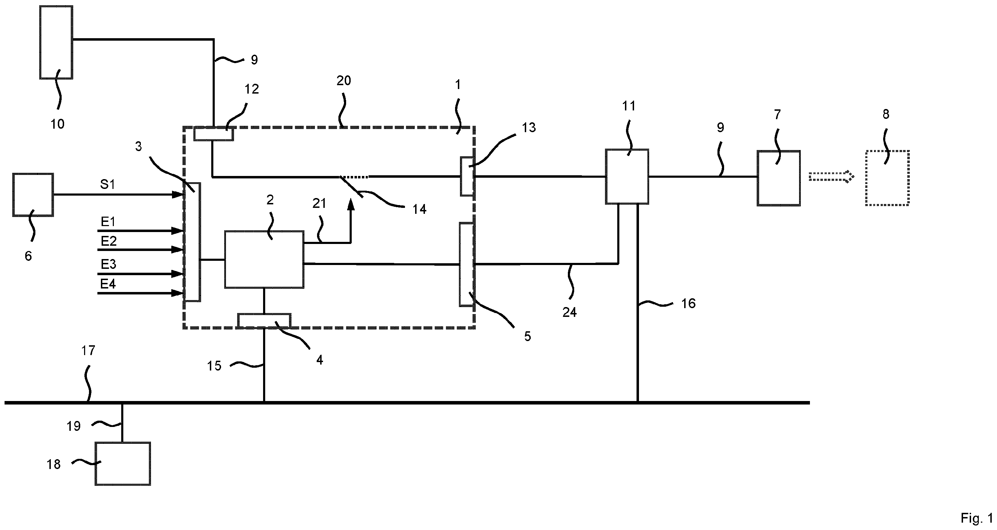

Fig. 1 zeigt eine schematische Darstellung einer Anordnung mit einer Sicherheitsvorrichtung 1 für eine Landmaschine gemäß einem ersten Ausführungsbeispiel. Die Landmaschine (nicht dargestellt) kann von beliebiger Art sein. Zum Beispiel handelt es sich um einen Schlepper und ein vom Schlepper gezogenes Anbaugerät wie beispielsweise Sämaschine, Spritzmaschine, Bodenbearbeitungsmaschine, Düngerstreuer oder dergleichen. In einer anderen Ausgestaltung ist die Landmaschine mit einem Schlepper gebildet, welcher das Anbaugerät selbst trägt. Auch als selbstfahrende Arbeitsmaschine, die eingerichtet ist, landwirtschaftliche Arbeiten auszuführen, wie zum Beispiel Düngerstreuen, Sähen, Ernten, Bodenbearbeitung, Transportieren, Ausbringen von Pflanzenschutzmittel oder dergleichen, kann die Landmaschine ausgeführt sein. Die Sicherheitsvorrichtung 1 kann auf dem Schlepper und / oder dem Anbaugerät angeordnet sein. Es kann vorgesehen sein, funktionelle Komponenten der Sicherheitsvorrichtung 1 auf dem Schlepper und dem Anbaugerät anzuordnen, diese also auf Schlepper und Anbaugerät zu verteilen.

Die Landmaschine kann unterschiedliche Betriebszustände annehmen, die jeweils durch einen oder mehrere Zustandseigenschaften der Landmaschine charakterisiert sind. Zum Beispiel kann die Landmaschine einen Arbeits- oder Nutzungszustand einnehmen, welcher durch ein oder mehrere Zustandseigenschaften charakterisiert ist. So kann eine geringe Fahrgeschwindigkeit als Zustandseigenschaft anzeigen, dass die Landmaschine im Arbeitszustand bei der Feldarbeit ist. Alternativ oder ergänzend kann eine ausgefahrene Stellung eines Maschinenbauteils wie beispielsweise eines Rahmenbauteils und / oder eines Arbeitswerkzeugs als Zustandseigenschaft den Arbeits- oder Nutzungszustand indizieren oder charakterisieren. Ein weiterer Betriebszustand der Landmaschine ist beispielweise der Transportzustand, in welchem die Landmaschine insbesondere für Transport- oder Straßenfahrten hergerichtet ist. Eine Zustandseigenschaft des Transportzustands ist zum Beispiel eine im Vergleich zur Feldarbeit erhöhte Fahrgeschwindigkeit der Landmaschine, was eine Fahrt auf Straßen oder Wegen anzeigen kann. Auch ein eingefahrener Zustand für verlagerbare Maschinenbauteile wie beispielsweise Rahmenbauteile und / oder Arbeitswerkzeuge kann eine Zustandseigenschaft sein, die den Transportzustand der Landmaschine indiziert.

Betriebszustände, in denen eine Betätigung eines oder mehrerer Aktoren, beispielsweise eines längenveränderbaren Zylinders und / oder eines Stößels zum Öffnen oder zum Schließen eines Ventils, aus Sicherheitsgründen unterbunden oder blockiert werden soll, werden hier als abzusichernde Zustände der Landmaschine bezeichnet. Die Sicherheitsvorrichtung 1 in ihren unterschiedlichen Ausgestaltungsvarianten ist eingerichtet, eine solche Sicherung der Landmaschine bereitzustellen, indem ein Sicherheitszustand aktiviert wird.

Gemäß Fig. 1 weist die Sicherheitsvorrichtung 1 eine Steuereinrichtung 2 auf, die mit mindestens einem Prozessor zur Datenverarbeitung gebildet ist. Die Steuereinrichtung 2 kann einen dem Prozessor zugeordneten Speicher aufweisen und ist mit Hilfe geeigneter Software zum

Ausführen unterschiedlicher Funktionalitäten programmiert.

Die Steuereinrichtung 2 ist zur Datenübertragung jeweils funktional mit einer Signaleingangseinrichtung 3, einer Datenbusschnittstelle 4 sowie einer Signalausgangseinrichtung 5 verbunden.

Die Signaleingangseinrichtung 3 weist mehrere Signaleingänge S1, E1, ..., E4 auf, über die jeweils Datensignale empfangen werden können, insbesondere digitale Datensignale. Der Signaleingang S1 ist betreibbar, Sensorsignale von einem Sensor 6 zu empfangen, die ein oder mehrere Zustandseigenschaften der Landmaschine anzeigen. Beispielsweise kann es sich um einen Geschwindigkeitssensor handeln, mit dem eine momentane Fahrgeschwindigkeit der Landmaschine erfasst wird. Alternativ oder ergänzend kann ein Positions- oder Ortssensor vorgesehen sein, dessen Positionssignale eine momentane Ortsposition für die Landmaschine anzeigen, zum Beispiel dahingehend, ob die Landmaschine sich auf einem Feld oder einer Straße befindet. Alternativ oder ergänzend kann mit der Sensoreinrichtung 6 ein Lage- und / oder ein Stellungssignal für einen Aktor 7 und / oder ein Maschinebauteil der Landmaschine erfasst werden, wobei das entsprechende Signal eine Verlagerungsstellung und / oder eine Schwenk- oder Drehstellung des Aktors 7 und / oder eines mittels des Aktors verlagerbaren Maschinen- oder Rahmenbauteils 8 der Landmaschine anzeigt. Auch kann das Stellungssignal eine Ventilstellung eines Ventils der Landmaschine anzeigen, zum Beispiel eines Ventils zum Öffnen und zum Schließen von Sprühdüsen, wie diese zum Beispiel bei Spritzmaschinen vorgesehen sind.

Der Aktor 7 kann zum Betätigen eines Elements oder einer Komponente der Landmaschine dienen. Hierzu gehört zum Beispiel das Verlagern, insbesondere zum Aus- und Einfahren, eines Arbeitswerkzeugs oder eines Tragarms der Landmaschine. In einem Ausführungsbeispiel kann das Betätigen des Aktors 7 dazu führen, dass hierdurch eine Maschinenbreite, -länge und oder -höhe der Landmaschine verändert wird. Dies ist zum Beispiel der Fall, wenn ein Maschinen- oder Rahmenbauteil aus- und eingeschwenkt wird, beispielsweise ein Tragarm mit Spritzdüsen einer Spritzmaschine.

Bei dem gezeigten Ausführungsbeispiel in Fig. 1 verläuft eine Versorgungsleitung 9, welche eine Energiequelle 10 zur Energieversorgung mit dem Aktor 7 und einer dem Aktor zugeordneten elektronischen Steuereinheit 11 (auch bezeichnet als ECU - "Elektronic Control Unit") verbindet, abschnittsweise in der Sicherheitsvorrichtung 1 zwischen einem Versorgungsleitungseingang 12 und einem Versorgungsleitungsausgang 13. Die Versorgungsleitung 9 kann bei dem gezeigten Ausführungsbeispiel innerhalb der Sicherheitsvorrichtung 1 mit Hilfe einer Schalteinrichtung 14 unterbrochen werden. Hierdurch werden sowohl die elektronische Steuereinheit 11 wie auch der Aktor 7 selbst von der Energieversorgung 10 getrennt, weshalb dann die notwendige Energie zum Betätigen des Aktors 7 nicht mehr zur Verfügung steht.

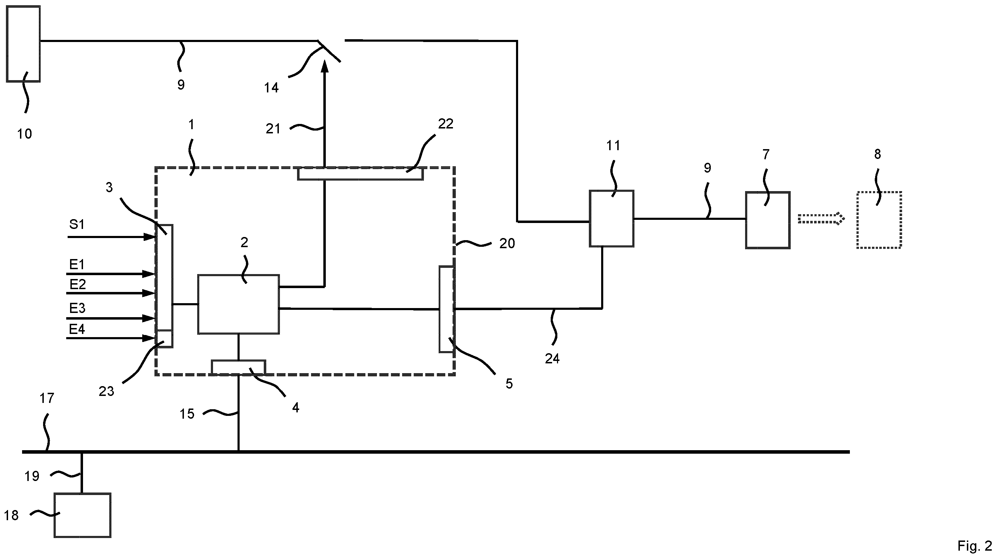

Die elektronische Steuereinheit 11 sowie die Steuereinrichtung 2 sind über eine jeweilige Datenbusanschlussleitung 15, 16 mit einem Datenbus 17 der Landmaschine verbunden. Alternativ kann insbesondere die elektronische Steuereinheit 11 auch frei von einer Anbindung an den Datenbus 17 sein (vgl. beispielhaft Fig. 2). Der Datenbus 17 kann für die Landmaschine in unterschiedlichen Ausführungsformen ausgebildet sein, wie dies an sich bekannt ist. Zum Beispiel kann der Datenbus 17 dem ISOBUS-Standard entsprechend ausgeführt sein. Gemäß Fig. 1 ist ein Terminal 18 über eine Datenbusanschlussleitung 19 an den Datenbus 17 angeschlossen. Das Terminal 18 stellt eine Mensch-Maschine-Schnittstelle bereit und ermöglicht insbesondere das Empfangen von Benutzereingaben eines Bedieners der Landmaschine sowie das Ausgeben von Informationen an den Bediener.

Es kann vorgesehen sein, dass funktionale Komponenten der Sicherheitsvorrichtung 1 elektronische Daten über den Datenbus 17 austauschen, zum Beispiel dann, wenn die funktionalen Komponenten über einen Schlepper und ein dem Schlepper zugeordnetes Anbaugerät der Landmaschine verteilt angeordnet sind.

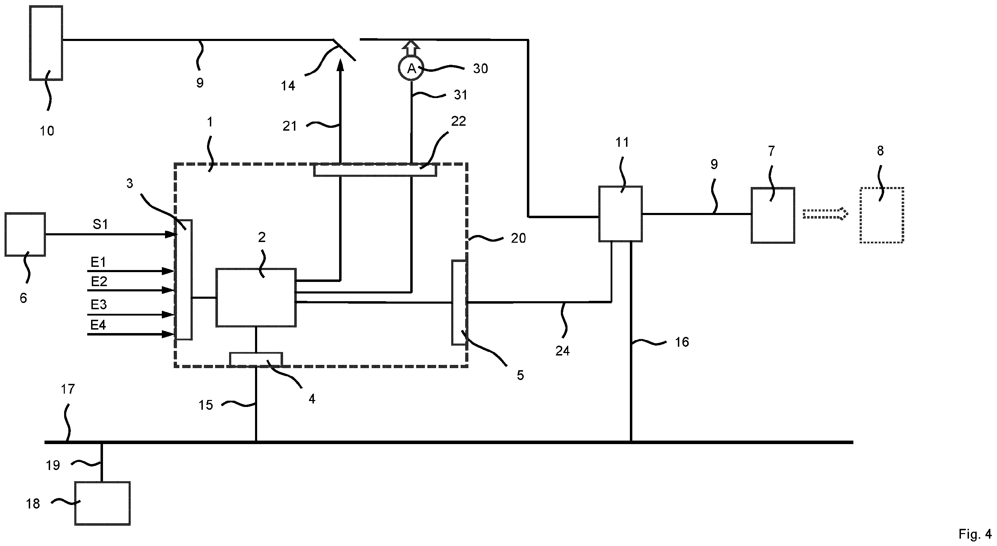

Bei der Ausgestaltung nach Fig. 1 kann für mehrere funktionale Komponenten der Sicherheitsvorrichtung 1 ein gemeinsames Vorrichtungsgehäuse 20 vorgesehen sein, was mittels gestrichelter Linie dargestellt ist. Insbesondere nimmt das Vorrichtungsgehäuse 20 im gezeigten Beispiel die Steuereinrichtung 2, die Signaleingangseinrichtung 3, die Signalausgangseinrichtung 5 sowie die Schalteinrichtung 14 auf. Bei alternativen Ausgestaltungen kann die Versorgungsleitung 9 vollständig außerhalb der Sicherheitsvorrichtung 1 verlaufen, insbesondere außerhalb des Vorrichtungsgehäuses 20 (vgl. insbesondere Erläuterungen zu Fig. 2 und 4 unten).

Im Folgenden wird die Funktionsweise der Sicherheitsvorrichtung 1 weiter erläutert. Wird über den Signaleingang S1 ein Zustandssignal empfangen, welches insbesondere als Sensorsignal eine oder mehrere Zustandseigenschaften für die Landmaschine anzeigt, bestimmt die Steuereinrichtung 2 mittels Auswerten des Zustandssignals, ob ein abzusichernder Betriebszustand der Landmaschine vorliegt, in welchem insbesondere eine Betätigung des Aktors 7 der Landmaschine zu blockieren oder zu unterbinden ist. Beispielsweise ist auf diese Weise zu verhindern, dass eine Betätigung des Aktors 7 dazu führt, dass eine die Maschinenbreite, -länge und / oder -höhe der Landmaschine vergrößernde Aktion stattfindet, zum Beispiel das Verlagern eines Rahmenbauteils der Landmaschine in eine ausgefahrene Stellung. In einem anderen Fall ist das Öffnen eines Ventils der Landmaschine mittels des Aktors 7 zu unterbinden, zum Beispiel wenn sich die Landmaschine im Transportzustand befindet.

Beim Prüfen, ob der abzusichernde Betriebszustand vorliegt, kann die Steuereinrichtung 2 beispielsweise bestimmen, ob die empfangenen Sensorsignale einen Schwellwert für die Zustandseigenschaft der Landmaschine erreichen oder überschreiten, zum Beispiel einen Schwellwert für die Fahrgeschwindigkeit der Landmaschine. Wird durch die Steuereinrichtung 2 bestimmt, dass ein abzusichernder Betriebszustand der Landmaschine vorliegt, aktiviert die Steuereinrichtung 2 hierauf für die Sicherheitsvorrichtung 1 einen Sicherheitszustand. Dies umfasst bei dem Ausführungsbeispiel in Fig. 1 insbesondere das Erzeugen und Bereitstellen eines ersten Steuersignals durch die Steuereinrichtung 2 und das Senden des ersten Steuersignals über eine Signalleitung 21 an die Schalteinrichtung 14. Das erste Steuersignal ist eingerichtet, ein Unterbrechen der Versorgungsleitung 9 durch die Schalteinrichtung 14 zu bewirken, so dass, wenn der Sicherheitszustand aktiviert wurde, hierdurch die elektronische Steuereinheit 11 sowie der Aktor 7 von der Energiequelle 10 getrennt werden. Eine Betätigung des Aktors 7 ist nicht mehr möglich, auch nicht zufällig oder unbeabsichtigt.

Wird zu einem späteren Zeitpunkt während der Aktivierung des Sicherheitszustands über die Signaleingangseinrichtung 3, insbesondere einen der Signaleingänge E1, ..., E4 ein Freigabe-signal empfangen, deaktiviert die Steuereinrichtung 2 hierauf den Sicherheitszustand, wozu mittels der Steuereinrichtung 2 insbesondere ein zweites Steuersignal zum Schließen der Versorgungsleitung 9 bereitgestellt und an die Schalteinrichtung 14 übermittelt wird, worauf diese die Versorgungsleitung 9 schließt, so dass die elektronische Steuereinheit 11 sowie der Aktor 7 wieder mit der Energiequelle 10 verbunden sind, was insbesondere eine Betätigung des Aktors 7 ermöglicht.

Fig. 2 zeigt eine schematische Darstellung einer Anordnung mit der Sicherheitsvorrichtung 1 gemäß einem zweiten Ausführungsbeispiel. Im Unterschied zu der Ausgestaltung in Fig. 1 verläuft die Versorgungsleitung 9 vollständig außerhalb des Vorrichtungsgehäuses 20, was zur Folge hat, dass auch die Schalteinrichtung 14 außerhalb des Vorrichtungsgehäuses 20 angeordnet ist. Die Signalleitung 21 verläuft über einen weiteren Signalausgang 22 zu der Schalteinrichtung 14. Hinsichtlich der Funktion der Anordnung in Fig. 2 gelten die obigen Ausführungen zu Fig. 1 entsprechend.

Beim dem Ausführungsbeispiel in Fig. 2 ist die Signaleingangseinrichtung 3 mit einer Empfangseinrichtung 23 gebildet, welche zum Beispiel dem Signaleingang E4 zugeordnet und eingerichtet ist, drahtlos übermittelte Datensignale zu empfangen, beispielweise das Freigabe-signal.

Die dem Aktor 7 zugeordnete elektronische Steuereinheit 11 ist über eine Datenleitung 24 mit der Signalausgangseinrichtung 5 und hierüber mit der Steuereinrichtung 2 verbunden, was zwischen der Steuereinrichtung 2 und der elektronischen Steuereinheit 11 einen Datenaustausch ermöglicht. Zum Beispiel kann die Steuereinrichtung 2 betreibbar sein, auf das Aktivieren des Sicherheitszustandes ein Sicherheitszustands-Signal bereitzustellen und über die Datenleitung 24 zu senden, wobei das Sicherheits-Zustandssignal das Aktivieren des Sicherheitszustandes für die Sicherheitsvorrichtung 1 anzeigt.

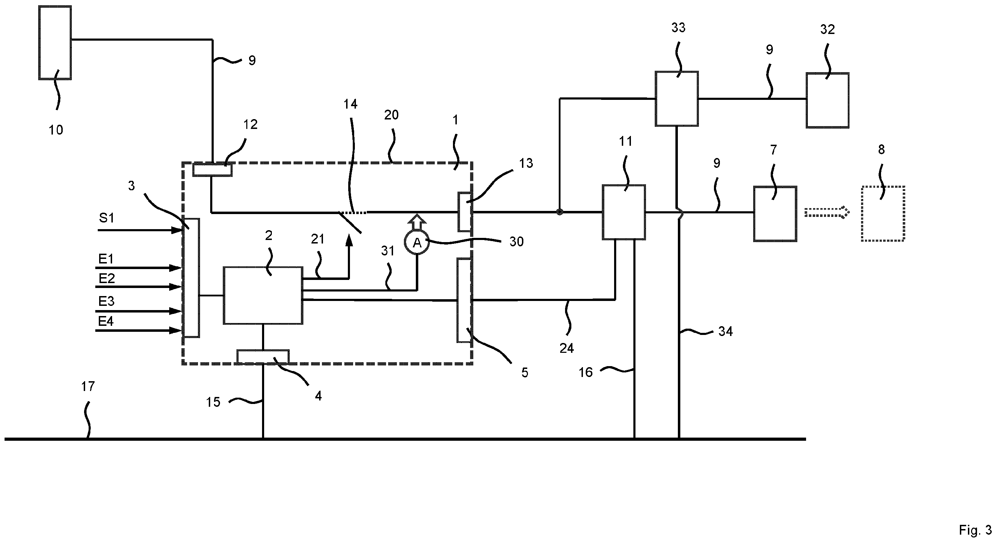

Fig. 3 und 4 zeigen Anordnungen mit der Sicherheitsvorrichtung 1 gemäß einer dritten und einer vierten Ausführungsform. Bei dem Ausführungsbeispiel in Fig. 3 erstreckt sich die Versorgungsleitung 9, vergleichbar der Ausgestaltung in Fig. 1, abschnittsweise in dem oder durch das Vorrichtungsgehäuse 20. Demgegenüber verläuft die Versorgungsleitung 9 beim vierten Ausführungsbeispiel gemäß Fig. 4 vollständig außerhalb des Vorrichtungsgehäuses 20.

Bei den Ausführungsbeispielen in den Fig. 3 und 4 ist jeweils eine Stromüberwachungseinrichtung 30 vorgesehen, zum Beispiel ein Amperemeter, die betreibbar ist, den in der Versorgungsleitung 9 fließenden Strom (Stromfluss) zu messen. Bei diesen Ausführungsbeispielen aktiviert die Steuereinrichtung 2 den Sicherheitszustand, wenn beim Auswerten des oder der empfangenen Zustandssignale bestimmt wird, dass diese einen abzusichernden Zustand der Landmaschine anzeigen.

Im Unterschied zu den Ausführungsbeispielen in den Fig. 1 und 2 erfolgt nun jedoch nicht unmittelbar oder sogleich beim Aktivieren des Sicherheitszustandes die Unterbrechung der Versorgungsleitung 9 mit Hilfe der Schalteinrichtung 14. Vielmehr stellt die Steuereinrichtung 2 beim Aktivieren des Sicherheitszustands zunächst ein drittes Steuersignal zur Verfügung und übermittelt dieses über eine weitere Signalleitung 31 an die Stromüberwachungseinrichtung 30, welche aufgrund des dritten Steuersignals beginnt, den Strom in der Versorgungsleitung 9 zu messen. Strommesswerte, die dem Stromfluss in der Versorgungsleitung 9 anzeigen, werden von der Stromüberwachungseinrichtung 30 an die Steuereinrichtung 2 übermittelt, welche beim Auswerten bestimmt, ob die Strommesswerte einen Stromschwellwert erreichen oder überschreiten. Wenn dies der Fall ist, wird sodann das erste Steuersignal von der Steuereinrichtung 2 bereitgestellt und an die Schalteinrichtung 14 übermittelt, um die Versorgungsleitung 9 zu unterbrechen. Die Unterbrechung der Versorgungsleitung 9 erfolgt also insbesondere erst dann, wenn die Strommessewerte sich erhöhen, was als Indiz oder Anzeichen gewertet wird, dass, obwohl der Sicherheitszustand aktiviert ist, versucht wird oder beabsichtigt ist, den Aktor zu betätigen. Dies wird sodann mittels Unterbrechen der Versorgungsleitung 9 verhindert.

Bei der Ausgestaltung nach Fig. 3 ist beispielhaft gezeigt, dass im Fall des Sicherheitszustandes mittels Unterbrechen der Versorgungsleitung 9 die Energieversorgung für mindestens einen weiteren Aktor 32 und seine zugeordnete elektronisch Steuereinheit 33 unterbrochen werden kann. Der elektronisch Steuereinheit 33 des weiteren Aktors 32 ist über eine weitere Datenbusanschlussleitung 34 mit dem Datenbus 17 verbunden.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

## Patentansprüche

1. Sicherheitsvorrichtung (1) für eine Landmaschine, mit
- einer Steuereinrichtung (2), die mindestens einen Prozessor aufweist;
- einer Signaleingangseinrichtung (3), die mit der Steuereinrichtung (2) funktional verbunden und betreibbar ist,
- ein Zustandssignal zu empfangen, welches einen Betriebszustand einer Landmaschine anzeigt, und
- ein Freigabesignal zu empfangen; und
- einer Schalteinrichtung (14), die der mit der Steuereinrichtung (2) funktional verbunden und betreibbar ist, als Reaktion auf Steuersignale von der Steuereinrichtung (2) eine Versorgungsleitung (9) zu einer Energieversorgung eines Aktors (7) der Landmaschine und einer dem Aktor (7) zugeordneten elektronischen Steuereinheit zu unterbrechen und zu schließen;
wobei die Steuereinrichtung (2) betreibbar ist,
- als Reaktion auf den Empfang des Zustandssignals in der Steuereinrichtung (2) mittels Auswerten des Zustandssignals zu bestimmen, ob für die Landmaschine ein abzusichernder Betriebszustand vorliegt, in welchem eine Betätigung eines Aktors (7) der Landmaschine zu blockieren ist;
- einen Sicherheitszustand zu aktivieren, wenn beim Auswerten des Zustandssignals bestimmt wird, dass der abzusichernde Zustand vorliegt;
- ein erstes Steuersignal zum Unterbrechen der Versorgungsleitung (9) für eine Übermittlung an die Schalteinrichtung (14) bereitzustellen, während der Sicherheitszustand aktiviert ist; und
- als Reaktion auf den Empfang des Freigabesignals in der Steuereinrichtung (2) den Sicherheitszustand zu deaktivieren, wobei beim Deaktivieren mittels der Steuereinrichtung (2) ein zweites Steuersignal zum Schließen der Versorgungsleitung (9) für eine Übermittlung an die Schalteinrichtung (14) bereitstellbar ist.

2. Sicherheitsvorrichtung (1) nach Anspruch 1, **dadurch gekennzeichnet, dass** Signaleingangseinrichtung einen Zustandssignaleingang, welcher betreibbar ist, das Zustandssignal zu empfangen, und einen Freigabe-Signaleingang aufweist, welcher getrennt von dem Zustandssignaleingang gebildet und betreibbar ist, Freigabesignal zu empfangen.

3. Sicherheitsvorrichtung (1) nach Anspruch 1 oder 2, **gekennzeichnet durch** eine der folgenden Ausführungen:
- die Steuereinrichtung (2), die Signaleingangseinrichtung (3) und die Schalteinrichtung (14) sind in einem gemeinsamen Vorrichtungsgehäuse (20) angeordnet; und
- die Steuereinrichtung (2) und die Signaleingangseinrichtung (3) sind in einem Vorrichtungsgehäuse (20) angeordnet, und die Schalteinrichtung (14) ist außerhalb des Vorrichtungsgehäuses (20) angeordnet.

4. Sicherheitsvorrichtung (1) nach mindestens einem der vorangehenden Ansprüche, **dadurch gekennzeichnet, dass**
- eine Stromüberwachungseinrichtung vorgesehen ist, welche mit der Steuereinrichtung (2) funktional verbunden und betreibbar ist, einen Stromfluss in der Versorgungsleitung (9) zu der dem Aktor (7) zugeordneten elektronischen Steuereinheit und dem Aktor (7) zu erfassen und Strommesssignale an die Steuereinrichtung (2) zu senden, welche Strommesswerte für den erfassten Stromfluss anzeigen; und
- die Steuereinrichtung (2) betreibbar ist,
- als Reaktion auf den Empfang des Zustandssignals in der Steuereinrichtung (2) den Sicherheitszustand zu aktivieren und ein drittes Steuersignal zum Starten des Erfassens des Stromflusses bereitzustellen und an die Stromüberwachungseinrichtung zu senden, und
- das erste Steuersignal zum Unterbrechen der Versorgungsleitung (9) nach dem Empfangen des Zustandssignals erst dann bereitzustellen und an die Schalteinrichtung (14) zu senden, wenn die Strommesswerte gleich einem oder größer als ein Stromschwellwert sind.

5. Sicherheitsvorrichtung (1) nach mindestens einem der vorangehenden Ansprüche, **dadurch gekennzeichnet, dass** die Steuereinrichtung (2) betreibbar ist, als Reaktion auf den Empfang des Zustandssignals in der Steuereinrichtung (2) das erste Steuersignal zum Unterbrechen der Versorgungsleitung (9) um eine vorbestimmte Zeitverzögerung gegenüber dem Empfang des Zustandssignals verzögert bereitzustellen und an die Schalteinrichtung (14) zu senden.

6. Sicherheitsvorrichtung (1) nach mindestens einem der vorangehenden Ansprüche, **dadurch gekennzeichnet, dass** eine Datenbusschnittstelle (4) vorgesehen ist, welche mit der Steuereinrichtung (2) funktional verbunden und eingerichtet ist, zum Übertragen von Datensignalen an einen Datenbus (17) der Landmaschine funktional zu koppeln.

7. Sicherheitsvorrichtung (1) nach mindestens einem der vorangehenden Ansprüche, **dadurch gekennzeichnet, dass** die Steuereinrichtung (2) betreibbar ist, auf das Aktivieren des Sicherheitszustandes ein Sicherheitszustands-Signal bereitzustellen, wobei das Sicherheits-Zustandssignal das Aktivieren des Sicherheitszustandes für die Sicherheitsvorrichtung (1) anzeigt.

8. Sicherheitsvorrichtung (1) nach mindestens einem der vorangehenden Ansprüche, **dadurch gekennzeichnet, dass** die Signaleingangseinrichtung (3) und die Steuereinrichtung (2) betreibbar sind, das Zustandssignal ein Sensorsignal von einer Sensoreinrichtung umfassend zu empfangen, wobei das Sensorsignal einen mittels der Sensoreinrichtung erfassten Betriebszustand der Landmaschine anzeigt.

9. Sicherheitsvorrichtung (1) nach Anspruch 8, **dadurch gekennzeichnet, dass** die Steuereinrichtung (2) betreibbar ist, mindestens ein Sensorsignal aus der folgenden Gruppe zu empfangen und auszuwerten:
- Geschwindigkeitssignal, welches eine momentane Fahrgeschwindigkeit der Landmaschine anzeigt;
- Positionssignal, welches eine momentane Ortsposition der Landmaschine anzeigt;
- Lagesignal, welches eine Verlagerungsstellung eines Maschinen- oder Rahmenteils der Landmaschine anzeigt; und
- Stellungssignal, welches eine Stellung eines Maschinen- oder Rahmenteils der Landmaschine anzeigt, insbesondere eine Schwenk- oder Drehstellung.

10. Sicherheitsvorrichtung (1) nach Anspruch 8 oder 9, **dadurch gekennzeichnet, dass** die Steuereinrichtung (2) betreibbar ist, als Sensorsignal ein Aktor-Sensorsignal für den Aktor (7) zu empfangen und auszuwerten.

11. Sicherheitsvorrichtung (1) nach mindestens einem der vorangehenden Ansprüche, **dadurch gekennzeichnet, dass** die Signaleingangseinrichtung (3) und die Steuereinrichtung (2) betreibbar sind, das Freigabesignal ein Benutzer-Freigabe-Signal umfassend zu empfangen.

12. Landmaschine, mit einer Sicherheitsvorrichtung (1) nach mindestens einem der vorangehenden Ansprüche.

13. Verfahren zum Betreiben einer Sicherheitsvorrichtung (1) einer Landmaschine, mit:
- Empfangen eines Zustandssignals in einer mindestens einen Prozessor aufweisenden Steuereinrichtung (2) einer Sicherheitsvorrichtung (1) einer Landmaschine über eine Signaleingangseinrichtung (3) der Sicherheitsvorrichtung (1), welche mit der Steuereinrichtung (2) funktional verbunden ist;
- als Reaktion auf das Empfangen des Zustandssignals, Auswerten des Zustandssignals und Bestimmen durch die Steuereinrichtung (2), ob für die Landmaschine ein abzusichernder Betriebszustand vorliegt, in welchem eine Betätigung eines Aktors (7) der Landmaschine zu blockieren ist;
- Aktivieren eines Sicherheitszustands für die Sicherheitsvorrichtung (1), wenn beim Auswerten des Zustandssignals bestimmt wird, dass der abzusichernde Zustand vorliegt;
- Bereitstellen ein erstes Steuersignals zum Unterbrechen einer Versorgungsleitung (9) mittels der Steuereinrichtung (2) und Übersenden des ersten Steuersignals an eine Schalteinrichtung (14) während der Sicherheitszustand aktiviert ist, wobei über die Versorgungsleitung (9) der Aktor (7) der Landmaschine und eine dem Aktor (7) zugeordnete elektronische Steuereinheit (11) mit einer Energieversorgung (10) verbunden werden;
- Empfangen des ersten Steuersignals in einer Schalteinrichtung (14) der Sicherheitsvorrichtung (1), die der mit der Steuereinrichtung (2) funktional verbunden in der Versorgungsleitung (9) angeordnet ist, und Unterbrechen der Versorgungsleitung (9) mittels der Schalteinrichtung (14);
- Empfangen eines Freigabesignal in der Steuereinrichtung (2) über die Signaleingangseinrichtung (3) der Sicherheitsvorrichtung (1); und
- als Reaktion auf den Empfang des Freigabesignals, Deaktivieren den Sicherheitszustand für die Sicherheitsvorrichtung (1), wobei hierbei mittels der Steuereinrichtung (2) ein zweites Steuersignal zum Schließen der Versorgungsleitung (9) bereitgestellt und an die Schalteinrichtung (14) gesendet wird; und
- Empfangen des zweiten Steuersignals in der Schalteinrichtung (14) und Schließen der Versorgungsleitung (9) mittels der Schalteinrichtung (14).
